# EUROPÄISCHE PATENTSCHRIFT

(11) **EP 0 951 818 B1**
(45) Veröffentlichungstag und Bekanntmachung des Hinweises auf die Patenterteilung: **11.12.2002**
(21) Anmeldenummer: 99106147.4
(22) Anmeldetag: 07.04.1999
(51) Int. Cl.: A01D 78/10

(54) **Heuwerbungsmaschine**
Haymaking machine
Machine de fenaison

(30) Priorität: 24.04.1998 DE 29807484 U
(43) Veröffentlichungstag der Anmeldung: 27.10.1999
(73) Patentinhaber: Kverneland Gottmadingen GmbH & Co. KG, 78244 Gottmadingen (DE)
(72) Erfinder: Gandras, D., 78244 Gottmadingen (DE); Willburger, R., 78262 Gailingen (DE)
(74) Vertreter: Grünecker, Kinkeldey, Stockmair & Schwanhäusser Anwaltssozietät

(56) Entgegenhaltungen:
- EP-A- 0 224 667
- EP-A- 0 391 093
- EP-A- 0 460 288
- EP-A- 0 534 127
- EP-A- 0 628 240
- EP-A- 0 753 247
- EP-A- 0 806 133
- DE-A- 3 926 382
- DE-U- 8 912 185
- US-A- 4 171 726

## Beschreibung

Die Erfindung betrifft eine Heuwerbungsmaschine gemäß dem Oberbegriff des Anspruchs 1.

Heuwerbungsmaschinen, wie Kreiselheuer, werden für große Arbeitsbreiten mit sechs bis zwöff Kreisel gebaut, wobei vom Schlepper gezogenen Ausführungen mit separatem Transportfahrwerk gegenüber anderen Ausführungen mit Transporträdern unter den Kreiseln des inneren Kreiselpaares oder von den kreiseleigenen Laufrädern gebildeten Transporträdern der Vorzug gegeben wird. Aus der Praxis bekannte, gezogene Kreiselheuer mit separatem Transportfahrwerk werden an die Unterlenker des Schleppers angeschlossen. Der Transport erfolgt auf dem Transportfahrwerk. In der Transportstellung befinden sich die Transporträder in Arbeitsfahrtrichtung hinter den Kreiseln. In der Arbeitsstellung sind die Transporträder hochgeschwenkt. In Arbeitsstellung ergeben sich hohe Belastungen für die kreiseleigenen Laufräder der Kreisel des inneren Kreiselpaars, da der Schwerpunkt der Maschine hinter oder über deren Kreiselachsen liegt. Bei aus dem Prospekt "KW bzw. KWT, Kreiselzettwender" der Maschinenfabriken Bernhard Krone GmbH, D-48478 Spelle, Registriemummer 106304 -5' - 10.97,bekannten Geräten sind im Transportstand bei sechs Kreiseln die dritten und vierten Kreisel um ihre Arbeitsgelenke quer zur Arbeitsfahrtrichtung nach oben und die fünften und sechsten Kreisel um ihre Arbeitsgelenke schräg nach innen geklappt. Zum Transport wird die Maschine über die Dreipunkt-Hebevorrichtung des Schleppers ausgehoben. Dies führt zu einer ungünstigen Lage des Maschinenschwerpunktes in der Transportstellung und zu hohen Belastungen. Ist das Gerät mit acht Kreiseln ausgestattet, dann werden die sechs Kreisel wie vorhergehend geschildert verstellt. Zusätzlich werden die beiden äußersten Kreisel (sieben und acht) um zusätzliche Gelenkstellen schräg gegen die Arbeitsfahrtrichtung nach hinten geklappt. Dadurch ergibt sich ein außerordentlich hoher und instabiler Transportstand.

Bei der aus dem Prospekt "VOLTO 1050" der Firma Claas Vertriebsgesellschaft mbH, D-33426 Harsewinkel, Registriernummer 190.261.1, 7/96, bekannten Heuwerbungsmaschine mit acht Kreiseln werden die dritten und vierten Kreisel in Arbeitsfahrtrichtung nach vorne um zusätzliche vertikale Gelenkachsen beigeklappt. Die fünften und sechsten Kreisel werden um ihre Arbeitsgelenke nach oben geklappt, während die siebten und achten Kreisel entgegen der Arbeitsfahrtrichtung nach hinten geschwenkt werden. Die Laufräder der beiden innersten Kreisel fungieren als Transportfahrwerk. Der Transportstand ist instabil. Die Zinken der dritten und vierten Kreisel stehen seitlich vor.

EP-A-0 534 127 beschreibt eine Heuwerbungsmaschine mit acht Kreiseln und einem für Transportfahrt mittels der Dreipunkt-Hebevorrichtung des Schleppers aushebbaren Transportstand. Im Transportstand bleiben die beiden innersten Kreisel in ihren Lagen am Innenträger, während die beiden zweiten und dritten Kreisel jeder Seite mit den in einer Strecklage bleibenden Seitenträgem nach oben geschwenkt sind. Die die äußersten Kreisel tragenden Seitenträger sind um in Arbeitsstellung in etwa zum Boden vertikale Gelenke und in der Ebene der zweiten und dritten Kreisel nach hinten geschwenkt. Es ergibt sich ein hoher Transportstand mit ungünstiger Lage des Maschinenschwerpunktes und hohen Belastungen.

EP-A-0 628 240 beschreibt eine Heuwerbungsmaschine mit sechs Kreiseln, wobei entweder die dritten bis sechsten oder nur die fünften und sechsten Kreiseln mit ihren Seitenträgern um in der Arbeitsstellung in etwa bodenvertikale Gelenke entgegen der Fahrtrichtung nach hinten schwenkbar sind. Im Transportstand sind die dritten und vierten sowie die fünften und sechsten Kreisel jeweils um In Arbeitsstellung annähernd bodenparallele, zur Arbeitsfahrtrichtung parallele Gelenke einzeln oder gemeinsam nach oben schwenkbar. Die Heuwerbungsmaschine besitzt kein Transportfahrwerk.

DE-A- 39 26 382 beschreibt eine Heuwerbungsmaschine, die mit einer Deichsel an das Zugfahrzeug anhängbar ist und ein in eine Transportlage am Rahmen absenkbares Transportfahrwerk aufweist. Von den sechs Kreiseln bleiben in Transportstellung die beiden innersten am innenträger. Die dritten bis sechsten Kreisel schwenken mit ihren in Strecklage gehaltenen Seitenträgern nach oben und entgegen der Fahrtrichtung nach vorne.

Bei einer aus US-A-4 171 726 bekannten Landmaschine sind im Transportstand die beiden an den zentralen Querträgern anschließenden Außenabschnitte nach oben geschwenkt und die an den Außenabschnitten angebrachten Endabschnitte dann nach vorne an den Seiten des Schleppers vorbeigeschwenkt. Es handelt sich jedoch um keine Heuwerbungsmaschine. Ferner fehlt ein Transportfahrwerk.

Bei aus EP-A-806 133 und EP-A-753 247 bekannten Kreiselheumaschinen mit acht Kreiseln wird jeweils zunächst ein Kreisel nach vorne einwärts geschwenkt, ehe die weiter außenliegenden Kreisel nach oben und gegebenenfalls wieder zurückgeschwenkt werden.

Weiterer Stand der Technik ist enthalten in DE-U-89 12 185, EP-A-0 224 667, EP-A-0 460 288 und EP-A-0 391 093.

Der Erfindung liegt die Aufgabe zugrunde, eine Heuwerbungsmaschine der eingangs genannten Art zu schaffen, bei der im Transportstand eine günstige Lage des Maschinenschwerpunktes gegeben ist, die Belastungen für die Komponenten der Heuwerbungsmaschine bei Transportfahrt niedrig sind und das Transportfahrwerk innerhalb der Maschine optimal plazierbar ist.

Die gestellte Aufgabe wird mit den Merkmalen des Anspruchs 1 gelöst.

Mittels des Transport-Klappsystems an jeder Seite der Heuwerbungsmaschine wird ein optimierter Transportstand bei kompaktem Aufbau der Maschine erzielt. Der Maschinenschwerpunkt liegt in der Transportstellung in Arbeitsfahrtrichtung vor den Kreiseln des inneren Kreiselpaares und relativ tief, weil alle hochgeklappten Kreisel nahe oberhalb des Längsrahmens plaziert sind. Der Schlepper nimmt einen erheblichen Gewichtsanteil auf. Da die beiden an das innere Kreiselpaar anschließenden Kreisel mit den ersten, an Innenträger angelenkten Seitenträgern nach oben geklappt sind, ergibt sich vor dem inneren Kreiselpaar ein großer nutzbarer Raum zum Unterbringen des Transportfahrwerks, so daß die Transporträder beim Transport im wesentlichen unter dem Maschinenschwerpunkt liegen. Hoch aufragende und die Stabilität bei Transportfahrt verschlechternde Komponenten werden vermieden. In Arbeitsstellung werden die Zusatzgelenke durch ihre Verriegelungseinrichtungen außer Funktion gesetzt, so daß die Arbeitsgelenke für die Bodenanpassung sorgen können und auch die außenllegenden Kreisel ordnungsgemäß geführt werden. Zweckmäßig wird der oberhalb des Längsrahmens vorhandene Raum optimal genutzt, auch bei großen Kreiselzahlen, und ergibt sich auch dann eine günstige Lage des Maschinenschwerpunkts mit dem Transportstand in Arbeitsfahrtrichtung vor dem inneren Kreiselpaar. Die Heuwerbungsmaschine baut kompakt und kurz, da das Transportfahrwerk in Arbeitsfahrtrichtung vor oder unter dem inneren Kreiselpaar positioniert werden kann.

Es kann sich jeder Kreisel für sich und zwischen seinen beiden benachbarten Arbeitsgelenken an den Boden anpassen. Der Knickwinkel in den Arbeitsgelenken kann begrenzt sein. Die Achsen der Arbeitsgelenke könnten auch im wesentlichen horizontal verlaufen. Einer entsprechend der Kreiselneigung für das Arbeiten nach vorne schräg nach unten orientierten Lage der Gelenkachsen der Arbeitsgelenke an beiden Enden des Mittelträgers ist der Vorzug zu geben, da dadurch im Transportstand die weiteren Kreisel nach vorne verlagert werden. Um die weiteren Kreisel korrekt in den Transportstand überführen zu können, kann es zweckmäßig sein, Strecklagen-Verriegelungsvorrichtungen bei zumindest einem Arbeitsgelenk an jeder Seite vorzusehen. Diese Strecklagen-Verriegelungsvorrichtung wird aktiviert, sobald die Kreisel in den Transportstand zu überführen sind.

Dabei kann die Verstellung der Heuwerbungsmaschine mittels der Hydraulikzylinder und der Gestänge bequem erfolgen. Es ist jedoch auch denkbar, eine mechanische Spindeltriebskombination vorzusehen.

Bevorzugt werden alle Umstellbewegungen mittels Hydraulikzylinder, gegebenenfalls mit Federunterstützung, vorgenommen, die auch zur hydraulischen Blockierung einsetzbar sind.

Bei einer weiteren Ausführungsform werden die weiteren Kreisel im Transportstand stabil und sicher positioniert, so daß die zulässige Transportgeschwindigkeit nutzbar ist und schädliche Belastungen oder Pendelbewegungen unterdrückt werden.

Die Ausführungsform gemäß Anspruch 7 ist von besonderer, eigenständig erfinderischer Bedeutung. Der durch die Transport-Klappsysteme und den speziellen Transportstand im Bereich des inneren Kreiselpaares oder davor gewonnene Raum läßt sich nämlich gewinnbringend zur Unterbringung des Transportfahrwerks nutzen, so daß der Maschinenschwerpunkt praktisch über dem Transportfahrwerk liegt, zumindest in der Transportstellung. Die Transporträder sind nicht nur zum statisch günstigen Abstützen der Heuwerbungsmaschine bei Transportfahrt vorteilhaft, sondern lassen sich in der Arbeitsstellung im durch den Transportstand freigemachten Raum als Tasträder einsetzen, die knapp vor den Zinkenumlaufbahnen auf dem Boden laufen und zur Bodenanpassung beitragen. Die Transporträder werden demzufolge in der Arbeitsstellung in die Tastradstellung verstellt, in der sie einen Teil des Maschinengewichtes tragen und die Kreisel entlang Bodenunebenheiten führen. Die mit der Tastradfunktion betrauten Transporträder lassen sich zusätzlich zum Einstellen der Kreiselneigung heranziehen, in dem dann der ganze Längsrahmen relativ zum Schlepper höher oder tiefer gekippt wird. In der Arbeitsstellung laufen die kreiseleigenen Bodenlaufräder den davor angeordneten, mit der Tastradfunktion betrauten Transporträdern nach. Es ist hervorzuheben, daß diese Anordnung und Doppelfunktion der Transporträder bzw. des Transportfahrwerks besonders zweckmäßig in Verbindung mit dem eingangs erläuterten Transportstand ist. Der Transportstand ist jedoch nicht nur in Verbindung mit dem vorne unten angeordneten Transportfahrwerk zweckmäßig, sondem auch bei herkömmlicher Anordnung des Transportfahrwerks.

Zweckmäßig sind die Transporträder in der Transportstellung knapp vor dem inneren Kreiselpaar positioniert, während sie als Trasträder genügend weit vor den Zinkenumlaufbahnen laufen, um nicht mit dem Emtegut zu kollidieren.

Dabei sollten die Transporträder nur in der Tastradstellung vor dem inneren Kreiselpaar positioniert sein, um die Bodenanpassung zu verbessern, während sie in der Transportstellung unter oder sogar hinter dem inneren Kreiselpaar laufen. Dies kann baulich von Vorteil sein und ermöglicht eine Anpassung an die Lage des Maschinenschwerpunkts in der Transportstellung.

Vorteilhaft werden große Räder als Transport- bzw. Tasträder verwendet. Dies hat den Vorteil, daß sich weniger Erntegut um die Räder wickelt, daß sich ein ruhiger Lauf bei Transportfahrt und in der Arbeitsstellung ergibt, d.h., daß in Arbeitsstellung das Fahrverhalten der Heuwerbungsmaschine nicht nervös, sondern sehr stabil und nicht jede kleine Erhebung oder Vertiefung abgetastet sondern ausgeglichen wird. Die großen Räder sind geländegängig, federn besser als kleine und laufen langsam und verschleißarm.

Mit großer Spurweite läuft die Heuwerbungsmaschine in Arbeitsstellung und in der Transportstellung ruhig und stabil. Die Kippgefahr ist bei großer Spurweite außerordentlich gering, auch wegen der niedrigen Lage des Schwerpunkts des Transportstandes.

Die Umstellung zwischen der Transportstellung und der Tastradstellung ist bequem und exakt reproduzierbar. Mehrere Tastradstellungen ermöglichen in Verbindung mit der Verstellung der kreiseleigenen Laufräder die Änderung der Kreiselneigung.

Bei einer weiteren Ausführungsform ist das Transportfahrwerk baulich einfach und stabil.

Es kann die Heuwerbungsmaschine dank des statisch günstigen Transportstandes und gegebenenfalls des die Tastradfunktion erfüllenden Transportfahrwerks mit unterschiedlichen Kreiselzahlen bestückt werden.

Anhand der Zeichnung wird eine Ausführungsform einer Heuwerbungsmaschine in Form eines Kreiselheuers mit acht Kreiseln erläutert, obwohl die erfindungsgemäße Heuwerbungsmaschine auch mit weniger oder mehr Kreiseln ausgestattet sein könnte.

Es zeigen:
- Fig. 1: eine Heuwerbungsmaschine mit einem Transportstand kurz vor Einstellen der endgültigen Transportstellung, in einer Seitenansicht,
- Fig. 2: einen Zwischenschritt vor Erreichen des endgültigen Transportstandes, in einer Seitenansicht, und
- Fig. 3: schematisch die Heuwerbungsmaschine in der Arbeitsstellung, in Seitenansicht.

Eine Heuwerbungsmaschine A mit der Bauform eines Kreiselheuers mit acht Kreiseln K1 - K8 wird von einem Schlepper S gezogen und weist ein Transportfahrwerk T sowie einen speziellen Transportstand A auf, in den die äußeren Kreisel K3 - K8 in Relation zu einem inneren Kreiselpaar K1, K2 überführbar sind. Der Kreiselheuer weist einen Längsrahmen 1 (oder einen mittleren Zugbalken) auf, der am in Arbeitsfahrtrichtung vorderen Ende ein Gelenk 2 mit vertikaler Gelenkachse und einen Querträger 3 besitzt, der über eine Abstützung 4 und Anschlußelemente 5 beispielsweise an die Unterlenker einer Dreipunkt-Hebevorrichtung D des Schleppers S anschließbar ist. Über einen nur zum Teil angedeuteten Antriebsstrang 6, 33 werden die Kreisel K1 - K8 von der Zapfwelle des Schleppers S aus angetrieben. Am Längsrahmen 1 kann eine abklappbare Bodenstütze 7 vorgesehen sein.

Am in Arbeitsfahrtrichtung hinteren Ende des Längsrahmens 1 ist ein querliegender Mittelträger 8 angebracht, an dem die beiden Kreisel K1, K2 des inneren Kreiselpaares mit ihren Getriebegehäusen angebracht sind. Die Achsen der Kreisel K1, K2 sind wie üblich schräg nach oben in Arbeitsfahrtrichtung geneigt Der Mittelträger 8 steht über endseitige erste Arbeitsgelenke X1 mit zwei Seitenträgem 9 in Verbindung. Die Achse jedes Arbeitsgelenks X1 liegt in etwa in Arbeitsfahrtrichtung und entsprechend der Schräge der Kreiselneigung senkrecht zu dieser orientiert. Jeder Seitenträger 9 trägt einen weiteren Kreisel K3, K4 und ist über ein ein weiteres Arbeitsgelenk X2 umfassendes Transport-Klappsystem M mit einem weiteren Seitenträger 10 verbunden. Jeder Seitenträger 10 trägt einen weiteren Kreisel K5, K6 und ist, falls acht Kreisel insgesamt vorgesehen sind, über ein weiteres Arbeitsgelenk X3 mit einem Seitenträger 11 verbunden, der den letzten Kreisel K7, K8 trägt.

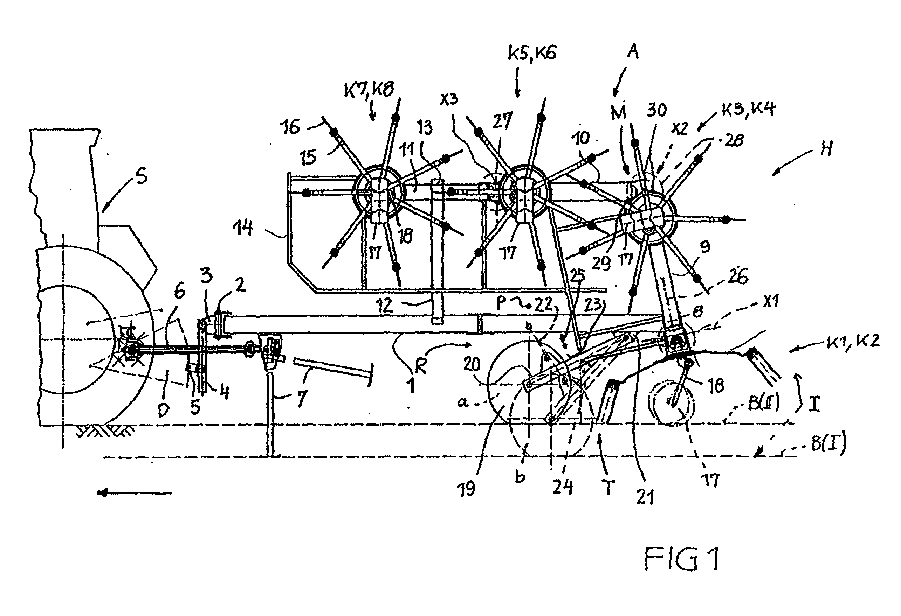

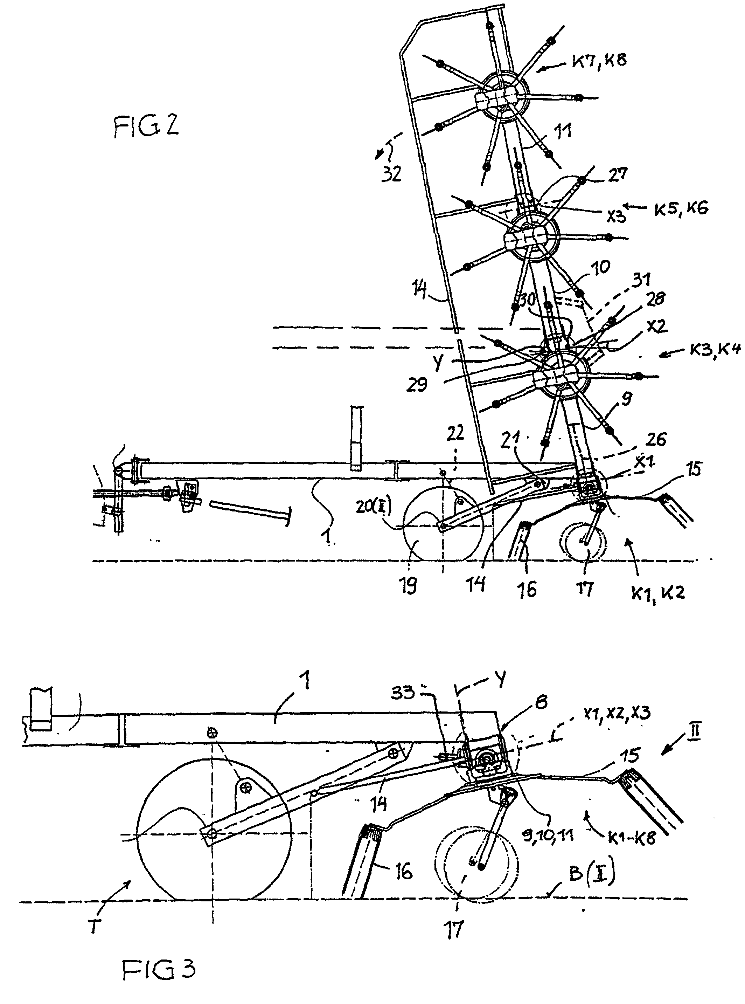

In der in Fig. 3 gezeigten Arbeitsstellung II sind die Gelenkachsen der Arbeitsgelenke X1, X2, X3 zueinander parallel und im wesentlichen in Arbeitsfahrtrichtung orientiert. Im Transportstand A in Fig. 1 sind die Seitenträger 10 um die Zusatzgelenke 29 in Fahrtrichtung nach vorne geklappt und stehen die Arbeitsgelenke X3 annähernd vertikal.

Das Transport-Klappsystem M weist zwischen den Seitenträgem 9 und 10 an jeder Seite der Heuwerbungsmaschine ein Zusatzgelenk 29 mit in der Arbeitsstellung gemäß Fig. 3 annähernd vertikaler Gelenkachse Y auf. Zweckmäßigerweise ist die Gelenkachse Y entsprechend der Kreiselneigung parallel zur Kreiselachse jedes Kreisels K1, K2. Zum Zusatzgelenk 29 gehört eine umstellbare Verriegelungseinrichtung 28, die in der Arbeitsstellung in Fig. 3 das Zusatzgelenk 29 blockiert und das Arbeitsgelenk X2 funktionstüchtig läßt. Bei den Arbeitsgelenken X1 könnte eine lösbare Verriegelungseinrichtung vorgesehen sein, um jedes Arbeitsgelenk X1 in Arbeitsstellung nur über einen begrenzten Schwenkbereich, z.B. in etwa ± 5°, zur Bodenanpassung knikken zu lassen, hingegen in gelöster Stellung das Hochschwenken jedes Seitenträgers 9 um annähernd 90°, gegebenenfalls bis auf Anschlag, zuzulassen. Bei jedem Arbeitsgelenk X3 kann zweckmäßigerweise ebenfalls eine Strecklagen-Verriegelungsvorrichtung 27 vorgesehen sein, um vor Einstellen des Transportstandes A in Fig. 1 die Seitenträger 10, 11 relativ zueinander festzulegen.

Am Längsrahmen 1 ist eine Seitenträgerfangvorrichtung 12 angebracht, zweckmäßigerweise mit Fanggabeln 13, in denen die Seitenträger 10, 11, zweckmäßigerweise zwischen den Kreiseln K5, K6 und K7, K8, abgestützt und festgelegt werden. Sind - wie gezeigt - acht Kreisel vorgesehen, dann greift die Fanggabel 13 zweckmäßigerweise am Seitenträger 11 an. Sind nur sechs Kreisel vorgesehen, dann greift die Fanggabel 13 zweckmäßigerweise am Seitenträger 10 an. Sind mehr als acht Kreisel vorgesehen, können an jeder Seite des Längsrahmens 1 auch mehrere Fanggabeln 13 vorgesehen sein.

Jeder Kreisel K1 - K8 ist mit einer Schutzbügeleinrichtung 14 ausgestattet, die in der Arbeitsstellung oberhalb von Zinkentragarmen 15 mit ihren Zinkengruppen 16 wirksam ist. Ferner weist jeder Kreisel K1 - K8 wenigstens ein kreiseleigenes Bodenlaufrad 17 an einem Radträger 18 auf.

Das Transportfahrwerk T besitzt mindestens zwei Transporträder 19, die erheblich größer sind als die kreiseleigenen Bodenlaufräder 17. Die Transporträder 19 sind an einem Radträger 20 angebracht, der um eine Anlenkstelle 21 am Längsrahmen 1 aufund abschwenkbar ist und sich von der Anlenkstelle 21 in Fahrtrichtung schräg nach unten erstreckt. Zwischen dem Radträger 20 und dem Längsrahmen 1 ist ein oder sind mehrere Hydraulikzylinder 22 angeordnet, die von oben nach unten gegen die Fahrtrichtung geneigt sind, und es ermöglichen, die Transporträder 19 in eine relativ zum Längsrahmen 1 tiefere Transportstellung b (gestrichelt) und in eine höhere Tastradstellung a zu verstellen und in der jeweiligen Stellung durch Anschlag festzulegen. Die Kolbenstangen der Hydraulikzylinder 22 können längenverstellbar sein. Gegebenenfalls sind zusätzlich Anschläge 23, 24 für die unterschiedlichen Stellungen vorgesehen. Zumindest der Anschlag 23 für die Tastradstellung a könnte höhenverstellbar sein (Pfeil 25). Alternativ könnten mehrere wahlweise eingreifende Anschläge für unterschiedliche Tastradstellungen (zum Verstellen der Kreiselneigung) vorgesehen sein.

Die Transporträder 19, deren Spurweite in etwa dem Achsabstand des inneren Kreiselpaares K1, K2 entspricht oder erheblich größer ist, befinden sich in Arbeitsfahrtrichtung vor dem inneren Kreiselpaar K1, K2. Durch die Geometrie der Abstützung des Radträgers 20 stehen die Transporträder 19 in der Tastradstellung weiter vor den Zinken als in der Transportstellung.

Zum Überführen der Seitenträger 9 in den Transportstand A sind zweckmäßigerweise Hydraulikzylinder 26 zwischen jedem Seitenträger 9 und dem Mittelträger 8 oder dem Längsrahmen 1 vorgesehen. In Fig. 2 ist angedeutet, daß auch für das Zusatzgelenk 29 und dessen Verriegelungseinrichtung 28 ein Hydraulikzylinder 31 zur Bewegungssteuerung vorgesehen sein kann, z.B. ein Hydraulikzylinder.

In Fig. 1 ist zur Verdeutlichung der Verstellung des Transportfahrwerks T der Boden B in der Arbeitsstellung II höherliegend angedeutet, als in der Transportstellung B (I). In der Transportstellung sind die Bodenlaufräder 17 des inneren Kreiselpaares K1, K2 ausgehoben, während sie in der Tastradstellung (ausgezogen gezeigt) wie die als Tasträder fungierenden Transporträder 19 auf dem Boden (II) laufen.

In der in Fig. 3 gezeigten Arbeitsstellung bilden die abgesenkten bzw. ausgeschwenkten Seitenträger 9, 10, 11 zusammen mit dem Mittelträger 8 einen Querträger für alle Kreisel K1 - K8. Das Transportfahrwerk befindet sich in der Tastradstellung, wobei die Bodenlaufräder 17 aller Kreisel K1 - K8 ebenfalls auf dem Boden B laufen. Die Arbeitsgelenke X1, X2, X3 liegen annähernd auf einer Ebene und sind entsperrt, so daß begrenzte Knickbewegungen zwischen den Seitenträgem 9, 10, 11 und dem Mittelträger 8 möglich sind. In dem Zusatzgelenk 29 mit der Gelenkachse Y ist die Verriegelungsvorrichtung 28 wirksam. Die Verriegelungseinrichtung 28 kann dadurch gebildet sein, daß zwei in Fig. 1 angedeutete Gelenklaschen 30 relativ zueinander blockiert sind. Es ist aber auch denkbar, das Zusatzgelenk 29 in der Arbeitsstellung auf Anschlag stehen zu lassen, so daß nur das Arbeitsgelenk X1 arbeiten kann.

Zum Umstellen der Heuwerbungsmaschine in die Transportstellung werden gemäß Fig. 2 zunächst die Arbeitsgelenke X3 in Strecklage mittels der Verriegelungseinrichtung 27 blockiert. Die Verriegelungseinrichtung 28 kann bereits dann gelöst werden. Gegebenenfalls sind die Arbeitsgelenke X2 ebenfalls um ihre nur in der Arbeitsstellung wirksamen Gelenkachsen verriegelt. Dann wird mittels der Hydraulikzylinder 26 jeder Seitenträger 9 um annähernd 90° nach außen oben bis in eine Endlage verschwenkt, die der Lage im Transportstand A entspricht. Dieser Hochschwenkbewegung folgen die gestreckten Seitenträger 10 und 11 mit ihren Kreiseln K3 - K8, bis die in Fig. 2 gezeigte Zwischenlage erreicht ist Die Transporträder 19 befinden sich nach wie vor in der Tastradstellung, In derauch die Bodenlaufräder 17 des inneren Kreiselpaares K1, K2 mittragen. In weiterer Folge wird der Hydraulikzylinder 31 betätigt, z.B. entriegelt, so daß die Seitenträger 10 und 11 in Richtung des Pfeiles 32 in Arbeitsfahrtrichtung und annähernd vertikal um die Gelenkachse Y des Zusatzgelenkes 29 nach unten schwenken, bis die Seitenträger 11 schließlich gemäß Fig. 1 in den Fanggabeln 13 positioniert sind. Dann befindet sich der Maschinenschwerpunkt P In etwa oberhalb der Transporträder 19. Schließlich werden die Transporträder 19 aus der Tastradstellung a mittels der Zylinder 22 in die Transportstellung b verstellt und die Bodenlaufräder 17 des inneren Kreiselpaares K1, K2 ausgehoben. Der Transportstand A ist erreicht. Die Heuwerbungsmaschine H ist zum Transport bereit, um auf dem Boden B (I) gezogen zu werden. Zum Abstellen in der Transportstellung kann die Bodenstütze 7 benutzt werden.

Als Alternative zur Anordnung der Transporträder 19 in der Transportstellung b in Arbeitsfahrtrichtung vor dem inneren Kreiselpaar K1, K2 ist es möglich, die Transporträder in die Transportstellung unter das Kreiselpaar K1, K2 oder sogar hinter dieses zu verschwenken, und dafür zu sorgen, daß die Transporträder 19 in der Tastradstellung a in Arbeitsfahrtrichtung vor dem inneren Kreiselpaar K1, K2 zu liegen kommen. Anstelle der Hydraulikzylinder (einfach wirkend oder doppelt wirkend) könnten auch elektromechanische Antriebseinrichtungen oder Spindeltriebe vorgesehen sein.

## Patentansprüche

1. Heuwerbungsmaschine, insbesondere gezogener Kreiselheuer, mit mindestens sechs symmetrisch zu einem Längsrahmen (1) an einem aus einem Innenträger (8) und beidseitigen, zumindest ersten und zweiten Seitenträgern (9, 10, 11) zusammengesetzten Querträger angeordneten Kreiseln (K1 - K8) mit kreiseleigenen Laufrädern (17), mit einem mehrrädrigen Transportfahrwerk (T) bei einem inneren, am Innenträger (8) fest angeordneten Kreiselpaar (K1, K2), und mit am Innenträger (8) und zwischen den Seitenträgem (9, 10, 11) angeordneten Arbeitsgelenken (X1, X2, X3) zur Bodenanpassung und zum Hochschwenken der äußeren Kreisel (K3 - K8) aus der Arbeitsstellung (II) in einen Transportstand (A) oberhalb des Inneren Kreiselpaares (K1, K2) für eine Transportstellung (I), **gekennzeichnet durch** ein Transportstand-Klappsystem (M), in dem in Kombination mit jedem Arbeitsgelenk (X2) zwischen dem ersten, am Innenträger (8) angelenkten, Seitenträger (9) und dem zweiten Seitenträger (10) ein zusätzliches Gelenk (29) mit In der Arbeitsstellung (II) in etwa vertikaler Gelenkachse (Y) sowie eine zwischen einer Lösestellung und einer Blockierstellung umstellbare Verriegelungseinrichtung (28) für das Zusatzgelenk (29) vorgesehen sind, und daß im Transportstand (A) die Kreisel (K3, K4) an den ersten Seitenträgern (9) gegenüber der Arbeitsstellung gleichsinnig um ca. 90° in den ersten Arbeitsgelenken (X1) nach oben und die weiteren Kreisel (K5 - K8) mit ihren Seitenträgern (10, 11) um die Zusatzgelenke (29) in Arbeitsfahrtrichtung um nahezu 90° bis in eine annähernd zum Längsrahmen (1) parallele und am Längsrahmen (1) abgestützte Lage geschwenkt sind, in der alle äußeren Kreisel (K3 - K8) in zwei annähernd zur Fahrtrichtung parallelen Ebenen und In etwa auf der Höhe der an den ersten Seitenträgem (9) angeordneten Kreisel (K3, K4) oder höher angeordnet sind.

2. Heuwerbungsmaschine nach Anspruch 1, **dadurch gekennzeichnet, daß** die Arbeitsgelenke (X1, X2, X3) im zulässigen Knickwinkel begrenzt sind und in Arbeitsstellung (II) annähernd in Arbeitsfahrtrichtung und senkrecht zur jeweiligen Kreiselachse orientierte Gelenkachsen aufweisen, und daß für wenigstens ein Arbeitsgelenk (X3) an jeder Seite eine Strecklagen-Verriegelungsvorrichtung (27) vorgesehen ist.

3. Heuwerbungsmaschine nach Anspruch 1, **dadurch gekennzeichnet, daß** im Bereich der inneren Arbeitsgelenke (X1) und des Zusatzgelenks (29) jeweils doppelt oder einfach wirkende Hydraulikzylinder (26, 31) zumindest zur Schwenkverstellung vorgesehen sind.

4. Heuwerbungsmaschine nach Anspruch 1, **dadurch gekennzeichnet, daß** im Bereich aller Arbeitsgelenke (X1, X2, X3) und der beiden Zusatzgelenke (29), gegebenenfalls ausgenommen das in Arbeitsstellung (II) äußerste Arbeitsgelenk (X3), Hydraulikzylinder (26, 31) zur Schwenkverstellung und gegebenenfalls hydraulischen Blockierung vorgesehen sind.

5. Heuwerbungsmaschine nach Anspruch 1, **dadurch gekennzeichnet, daß** auf dem Längsrahmen (1) beidseitig mechanische Seitenträger-Fangvorrichtungen (12, 13), vorzugsweise Fanggabeln, vorgesehen sind, in denen Im Transportstand (A) die weiteren Seitenträger (10, 11) annähernd parallel zum Längsrahmen (1) abstützbar sind.

6. Heuwerbungsmaschine nach wenigstens einem der vorhergehenden Ansprüche, **dadurch gekennzeichnet, daß** die Transporträder (19) des Transportfahrwerks (T) umstellbar sind zwischen einer relativ zum Längsrahmen (1) tieferen Transportstellung und wenigstens einer höheren Tastradstellung, in der sie in Arbeitsfahrtrichtung vor und benachbart zu den Umlaufbahnen der Kreisel des Kreiselpaares (K1, K2) positioniert sind und mittragende Tasträder (R) zur Bodenanpassung der Kreisel bilden.

7. Heuwerbungsmaschine nach Anspruch 6, **dadurch gekennzeichnet, daß** die Transporträder (19) in der Transportstellung (I) in Arbeitsfahrtrichtung näher vor den Kreiseln (K1, K2) des inneren Kreiselpaares positioniert sind als in der Tastradstellung (II), vorzugsweise in etwa unter oder knapp hinter dem Maschinenschwerpunkt (P) bei im Transportstand (A) befindlichen Kreiseln (K3 - K8).

8. Heuwerbungsmaschine nach Anspruch 6, **dadurch gekennzeichnet, daß** die Transporträder (19) in der Transportstellung (I) unterhalb der Kreisel (K1, K2) des inneren Kreiselpaares oder in Arbeitsfahrtrichtung dahinter positioniert sind, vorzugsweise in etwa unterhalb oder knapp hinter dem Maschinenschwerpunkt (P) bei im Transportstand (A) befindlichen Kreiseln (K3 - K8).

9. Heuwerbungsmaschine nach wenigstens einem der vorhergehenden Ansprüche, **dadurch gekennzeichnet, daß** die Transporträder (19) größer sind als die kreiseleigenen Laufräder (17), vorzugsweise in etwa doppelt so groß.

10. Heuwerbungsmaschine nach wenigstens einem der vorhergehenden Ansprüche, **dadurch gekennzeichnet, daß** die Spurweite der Transporträder (19) mindestens dem Kreiselachsabstand des Inneren Kreiselpaares (K1, K2) entspricht, vorzugsweise größer ist als dieser und vorzugsweise nahezu dem Außenmaß der Zinkenumlaufbahnen des inneren Kreiselpaares entspricht.

11. Heuwerbungsmaschine nach Anspruch 6, **dadurch gekennzeichnet, daß** die Transporträder (19) hydraulisch mit Zylindern (22) oder mechanisch, z.B. mittels Spindeltrieben, zwischen der Transportstellung (b) und der wenigstens einen Tastradstellung (a) verstellbar sind.

12. Heuwerbungsmaschine nach Anspruch 6, **dadurch gekennzeichnet, daß** die Transporträder (19) an einem von einer Anlenkstelle (21) am Längsrahmen (1) schräg nach vorne unten geneigten Radträger (20) angeordnet sind, der über wenigstens einen am Längsrahmen (1) abgestützten und gegen die Arbeitsfahrtrichtung schräg nach unten geneigten Hydraulikzylinder (22) um seine Anlenkstelle verschwenkbar ist.

13. Heuwerbungsmaschine nach wenigstens einem der vorhergehenden Ansprüche, **dadurch gekennzeichnet, daß** insgesamt sechs, acht, zehn oder zwölf Kreisel (K1 - K8) mit einander überlappenden Zinkenumlaufbahnen vorgesehen sind.

## Claims

1. Haymaking machine, more especially a towed rotary-type haymaker, having at least six rotors (K1 - K8), which are disposed symmetrically relative to an elongate frame (1) on a transverse support comprising an inner support (8) and lateral supports (9, 10, 11) on both sides, at least first and second lateral supports, said rotors being provided with their own running wheels (17), said machine having a multiple-wheeled conveyor chassis (T) with an inner pair of rotors (K1, K2) disposed securedly on the inner support (8), and said machine having operational pivot joints (X1, X2, X3), which are disposed on the inner support (8) and between the lateral supports (9, 10, 11), for adapting to the ground and for the upward pivotal movement of the outer rotors (K3 - K8) from the operational position (II) into a conveying state (A) above the inner pair of rotors (K1, K2) for a conveying position (I), **characterised by** a conveying state pivotal system (M), in which an additional pivot joint (29) is provided in combination with each operational pivot joint (X2) between the first lateral support (9), pivotally mounted on the inner support (8), and the second lateral support (10), said additional pivot joint having a pivot joint axis (Y), which is substantially vertical in the operational position (II), as well as a locking means (28) being provided in said system for the additional pivot joint (29), which locking means is displaceable between a releasing position and a blocking position, and **characterised in that**, in the conveying state (A), the rotors (K3, K4) are pivoted upwardly on the first lateral supports (9) relative to the operational position in the same direction through approx. 90° in the first operational pivot joints (X1), and the additional rotors (K5 - K8) are pivoted with their lateral supports (10, 11) about the additional pivot joints (29) in the operational travel direction through almost 90° into a position which is approximately parallel to the elongate frame (1) and is supported on the elongate frame (1), all of the outer rotors (K3 - K8) being disposed in said position in two planes, which are approximately parallel to the travel direction, and substantially on a level with the rotors (K3, K4), disposed on the first lateral supports (9), or higher.

2. Haymaking machine according to claim 1, **characterised in that** the operational pivot joints (X1, X2, X3) are defined within the permissible angle of curvature and, in the operational position (II), have pivot joint axes orientated approximately in the operational travel direction and perpendicularly relative to the respective rotor axis, and **in that** an extended position locking device (27) is provided on each side for at least one operational pivot joint (X3)

3. Haymaking machine according to claim 1, **characterised in that**, in the region of the inner operational pivot joints (X1) and of the additional pivot joint (29), double-acting or single-acting hydraulic cylinders (26, 31) are provided respectively at least for the pivotal displacement.

4. Haymaking machine according to claim 1, **characterised in that**, in the region of all of the operational pivot joints (X1, X2, X3) and of the two additional pivot joints (29), possibly with the exception of the outermost operational pivot joint (X3) when viewed with respect to the operational position (II), hydraulic cylinders (26, 31) are provided for the pivotal displacement and possibly for hydraulic blocking purposes.

5. Haymaking machine according to claim 1, **characterised in that** mechanical lateral support gripping devices (12, 13), preferably bifurcated grippers, are provided on both sides of the elongate frame (1), the additional lateral supports (10, 11) being supportable in said gripping devices, in the conveying state (A), approximately parallel to the elongate frame (1).

6. Haymaking machine according to at least one of the preceding claims, **characterised in that** the conveying wheels (19) of the conveying chassis (T) are displaceable between a conveying position, which is lower relative to the elongate frame (1), and at least a higher scanning wheel position, in which said wheels are positioned in front of and adjacent the circular paths of the rotors of the pair of rotors (K1, K2) when viewed with respect to the operational travel direction and form carrying scanning wheels (R) for adapting the rotors to the ground.

7. Haymaking machine according to claim 6, **characterised in that** the conveying wheels (19), in the conveying position (I), are positioned closer in front of the rotors (K1, K2) of the inner pair of rotors, when viewed with respect to the operational travel direction, than in the scanning wheel position (II), preferably substantially below or just behind the centre of gravity (P) of the machine when the rotors (K3 - K8) are situated in the conveying state (A).

8. Haymaking machine according to claim 6, **characterised in that** the conveying wheels (19), in the conveying position (I), are positioned beneath the rotors (K1, K2) of the inner pair of rotors, or therebehind when viewed with respect to the operational travel direction, preferably substantially beneath or just behind the centre of gravity (P) of the machine when the rotors (K3 - K8) are situated in the conveying state (A).

9. Haymaking machine according to at least one of the preceding claims, **characterised in that** the conveying wheels (19) are greater than the running wheels (17) specific to the rotors, preferably twice as large.

10. Haymaking machine according to at least one of the preceding claims, **characterised in that** the track width of the conveying wheels (19) corresponds at least to the axial spacing between the inner pair of rotors (K1, K2), preferably it is greater than said spacing, and preferably it corresponds almost to the external dimension of the circular paths of the tines of the inner pair of rotors.

11. Haymaking machine according to claim 6, **characterised in that** the conveying wheels (19) are hydraulically displaceable with cylinders (22) or mechanically displaceable, e.g. by means of spindle drives, between the conveying position (b) and the at least one scanning wheel position (a).

12. Haymaking machine according to claim 6, **characterised in that** the conveying wheels (19) are disposed on a wheel support (20), which is inclined forwardly and downwardly from a pivotal mounting position (21) on the elongate frame (1), and which is pivotable about its pivotal mounting position via at least one hydraulic cylinder (22), which is supported on the elongate frame (1) and is inclined downwardly when viewed with respect to a direction in opposition to the operational travel direction.

13. Haymaking machine according to least one of the preceding claims, **characterised in that** a total of six, eight, ten or twelve rotors (K1 - K8) are provided with tine circular paths which overlap one another.

## Revendications

1. Machine de fenaison, en particulier machine de fenaison rotative tractée, avec au moins six organes tournants (K1-K8) disposés symétriquement à un châssis longitudinal (1) à un support transversal constitué d'un support interne (8) et d'au moins de premier et deuxième supports latéraux (9, 10, 11) disposés des deux côtés, avec des roues de roulement (17) propres à l'organe tournant, avec un mécanisme de roulement de transport à plusieurs roues (T) auprès d'une paire d'organes tournants intérieurs (K1-K2) disposés fixement au support interne (8), et avec des articulations de travail (X1, X2, X3) disposées au support interne (8) et entre les supports latéraux (9, 10, 11) pour l'adaptation au sol et pour le pivotement vers le haut des organes tournants extérieurs (K3-K8) de la position de travail (II) dans un état de transport (A) au-dessus de la paire d'organes tournants intérieurs (K1, K2) pour une position de transport (I), **caractérisée par** un système de basculement d'état de transport (M) dans lequel sont prévus en combinaison avec chaque articulation de travail (X2) entre le premier support latéral (9) articulé au support interne (8) et le deuxième support latéral (10) une articulation additionnelle (29) avec, en position de travail (II) l'axe d'articulation (Y) à peu près vertical ainsi qu'une installation de verrouillage (28) commutable entre une position de relâchement et une position de blocage pour l'articulation additionnelle (29) et en ce qu'à l'état de transport (A), les organes tournants (K3, K4) aux premiers supports latéraux (9) sont pivotés par rapport à la position de travail dans le même sens selon environ 90° dans les premières articulations de travail (X1) vers le haut, et les autres organes tournants (K5-K8) avec leurs supports latéraux (10, 11) autour des articulations additionnelles (29) dans la direction de déplacement de travail selon presque 90° dans une position approximativement parallèle au cadre longitudinal (1) et s'appuyant au cadre longitudinal (1) dans laquelle tous les organes tournants extérieurs (K3-K8) sont disposés dans deux plans approximativement parallèles à la direction de déplacement et, environ à la hauteur des organes tournants (K3, K4) ou plus haut agencés au premier support latéral (9).

2. Machine de fenaison selon la revendication 1, **caractérisée en ce que** les articulations de travail (X1, X2, X3) sont limitées quant à l'angle de pliage autorisé et présentent en position de travail (II) des axes d'articulation orientés approximativement dans la direction de déplacement de travail et perpendiculairement à l'axe d'organe tournant respectif, et **en ce qu'**il est prévu pour au moins une articulation de travail (X3) à chaque côté un dispositif de verrouillage de position d'extension (27).

3. Machine de fenaison selon la revendication 1, **caractérisée en ce que** sont prévus au voisinage des articulations de travail intérieures (X1) et de l'articulation additionnelle (29) respectivement des vérins hydrauliques (26, 31) à action double ou simple au moins pour l'ajustement par pivotement.

4. Machine de fenaison selon la revendication 1, **caractérisée en ce que** sont prévus au voisinage de toutes les articulations de travail (X1, X2, X3) et des deux articulations additionnelles (29), le cas échéant à l'exception de l'articulation de travail (X3) la plus extérieure en position de travail (II), des vérins hydrauliques (26, 31) pour l'ajustement par pivotement et le cas échéant le blocage hydraulique.

5. Machine de fenaison selon la revendication 1, **caractérisée en ce que** sont prévus sur le cadre longitudinal (1) des deux côtés des dispositifs de cueillage de support latéral mécaniques (12, 13), de préférence des fourches de cueillage, dans lesquelles peuvent s'appuyer à l'état de transport (A) les autres supports latéraux (10, 11) approximativement parallèlement au cadre longitudinal (1).

6. Machine de fenaison selon au moins l'une des revendications précédentes, **caractérisée en ce que** les roues de transport (19) du mécanisme de roulement de transport (T) peuvent être changées entre une position de transport plus basse relativement au cadre longitudinal (1) et au moins une position de roue tâteuse plus haute dans laquelle elles sont positionnées dans la direction de déplacement de travail en amont et au voisinage des trajectoires des organes tournants de la paire d'organes tournants (K1, K2) et constituent des roues tâteuses (R) coporteuses pour l'adaptation au sol des organes tournants.

7. Machine de fenaison selon la revendication 6, **caractérisée en ce que** les roues de transport (19) sont positionnées dans la position de transport (I) dans la direction de travail plus près en amont des organes tournants (K1, K2) de la paire d'organes tournants internes que dans la position de roue tâteuse (II), de préférence à peu près sous ou juste derrière le centre de gravité (P) de la machine lorsque les organes tournants (K3-K8) se trouvent dans l'état de transport (A).

8. Machine de fenaison selon la revendication 6, **caractérisée en ce que** les roues de transport (19) sont positionnées dans la position de transport (I) sous les organes tournants (K1, K2) de la paire d'organes tournants internes ou dans la direction de déplacement de travail derrière ceux-ci, de préférence approximativement en dessous ou juste derrière le centre de gravité (P) de la machine, les organes tournants (K3-K8) se trouvant dans l'état de transport (A).

9. Machine de fenaison selon au moins l'une des revendications précédentes, **caractérisée en ce que** les roues de transport (19) sont plus grandes que les roues de roulement (17) propres aux organes tournants, de préférence deux fois plus grandes.

10. Machine de fenaison selon au moins l'une des revendications précédentes, **caractérisée en ce que** l'écartement des roues de transport (19) correspond au moins à l'entraxe de la paire d'organes tournants internes (K1, K2), qu'il est de préférence plus grand que celui-ci et qu'il correspond de préférence approximativement à la mesure extérieure des trajectoires de dents de la paire d'organes tournants interne.

11. Machine de fenaison selon la revendication 6, **caractérisée en ce que** les roues de transport (19) sont ajustables d'une manière hydraulique avec des vérins (22) ou d'une manière mécanique, par exemple par des commandes à broche, entre la position de transport (b) et au moins une position de roue tâteuse (a).

12. Machine de fenaison selon la revendication 6, **caractérisée en ce que** les roues de transport (19) sont disposées à un support de roues (20) incliné depuis un emplacement d'articulation (21) au cadre longitudinal (1) en biais vers l'avant, vers le bas, qui peut être amené à pivoter autour de son emplacement d'articulation par l'intermédiaire d'au moins un vérin hydraulique (22) prenant appui au cadre longitudinal (1) et incliné contre la direction de déplacement de travail vers le bas.

13. Machine de fenaison selon au moins l'une des revendications précédentes, **caractérisée en ce que** sont prévus en tout six, huit, dix ou douze organes tournants (K1-K8) avec des trajectoires de dents qui se chevauchent.
